# EUROPÄISCHE PATENTSCHRIFT

(11) **EP 1 642 064 B1**
(45) Veröffentlichungstag und Bekanntmachung des Hinweises auf die Patenterteilung: **15.09.2010**
(21) Anmeldenummer: 04738804.6
(22) Anmeldetag: 28.06.2004
(51) Int. Cl.: F21S 8/10, F21W 101/12, F21W 101/027, F21V 8/00, B60Q 1/34, F21Y 101/02

(54) **LEUCHTE FÜR EIN FAHRZEUG**
LIGHT FOR A VEHICLE
PHARE DESTINE A UN VEHICULE

(30) Priorität: 27.06.2003 DE 10329185
(43) Veröffentlichungstag der Anmeldung: 05.04.2006
(73) Patentinhaber: Guido Kellermann Produktentwicklung & Handel, 52068 Aachen (DE)
(72) Erfinder: KELLERMANN, Guido, 52072 Aachen (DE)
(74) Vertreter: Reuther, Martin
(86) Internationale Anmeldenummer: PCT/DE2004/001358
(87) Internationale Veröffentlichungsnummer: WO 2005/001332

(56) Entgegenhaltungen:
- EP-A- 1 367 870
- WO-A-00/55685
- DE-A- 19 507 234
- DE-A- 19 728 354
- US-A1- 2003 156 417

## Beschreibung

Die Erfindung betrifft eine Leuchte für ein Fahrzeug.

Bekanntlich trägt die Beleuchtung von Fahrzeugen erheblich zur Steigerung der Verkehrssicherheit bei. Insbesondere bei Motorrädern, welche aufgrund ihrer im Vergleich zu vierrädrigen Fahrzeugen geringeren Größe schlechter erkannt werden können, ist gute Beleuchtung ein großer Sicherheitsfaktor.

Zu finden sind Leuchten an Kraftfahrzeugen vor allem als Scheinwerfer, Rücklichter und Blinker. Dabei kommt den Blinkern eine besondere Bedeutung zu, denn diese kündigen einen Fahrtrichtungswechsel oder einen Spurwechsel an, werden also in Situationen eingesetzt, wo häufig andere Verkehrsteilnehmer auch seitlich des Fahrzeugs unmittelbar betroffen sein können.

Über Jahrzehnte haben sich Fahrzeugleuchten mit Glühfadenbirnen bewährt, welche in Reflektoren eingesetzt sind und hierdurch Licht in eine gewünschte Richtung werfen. Seit einigen Jahren sind vermehrt Entwicklungen zu beobachten, bei welchen Leuchtdioden (LEDs) und/oder Lichtleiter, unter anderem auch Faserlichtleiter mit zentraler Lichtquelle, vorgeschlagen werden. Eine solche Leuchte wird zum Beispiel in DE 195 07234 offenbart.

An Leuchten für Scheinwerfer, Rücklichter oder Blinker werden jedoch strenge Anforderungen gestellt. So haben die Leuchten für Blinker beispielsweise unter vorgegebenen Betriebsparametern in einer feststehenden Entfernung bestimmte Lichtintensitäten in einem Messraster zu gewährleisten, um zugelassen werden zu können. Bei Blinkern beispielsweise befindet sich dieses Messraster in mehreren Metern Entfernung von der Leuchtfläche des Blinkers entfernt und erstreckt sich über eine Breite von +/- 20° und über eine Höhe von +/- 10° bezüglich der zentralen Hauptstrahlrichtung.

Die Rasterfläche ist zwar relativ klein und weicht von der zentralen Leuchtrichtung um maximal 23° ab; dennoch ist es eine schwere Aufgabe für die Entwickler, das abgestrahlte Licht so zu bündeln, dass mit LEDs oder Lichtleitern die vorgeschriebene Leuchtdichte erfüllt wird. Das Problem stellt sich bei Faserlichtleitern mit zentraler Lichtquelle besonders, denn die zentral emittierte Lichtstrahlung wird bei einem System mit Faserleiterbaum vor der Abstrahlung vom Fahrzeug noch mehrfach aufgeteilt.

Bei LEDs hat sich in jüngster Zeit allerdings eine dynamische Entwicklung vollzogen. So existieren nun insbesondere Hochleistungs-LEDs mit einer erheblichen Lichtausbeute. Durch Anordnen einer Sammeloptik vor der LED, das heißt im Weg des Lichts von der LED entlang der Hauptstrahlrichtung, erfüllen die jüngst entwickelten LEDs nun bei entsprechend starker Bündelung die gesetzlichen Anforderungen der Rasterausleuchtung.

Bei weiter fortschreitender Entwicklung kann davon ausgegangen werden, dass auch die Systeme mit Aufteilung des emittierten Lichts in einem Baum aus Faserlichtleitern die gesetzlichen Anforderungen bald erfüllen können werden und somit die Aufgabe als gelöst anzusehen ist.

In absehbarer Zukunft wird dies nur dann möglich sein, wenn eine entsprechend starke, genau ausgerichtete Bündelung des emittierten Lichts vorgenommen wird. So schlägt die DE 100 36 323 A1 einen Lichtleiter in einer Leuchte für Fahrzeuge vor, bei welchem ein Zentralkörper des Lichtleiters zum Einkoppeln des emittierten Lichts nah an einer Lichtquelle angeordnet ist, bei welchem der Lichtleiter insbesondere aber mit seinem anderen Ende unmittelbar an eine zur Abstrahlung vorgesehene Lichtscheibe angeformt ist. Hierdurch wird eine kleine Lichtaustrittsfläche mit entsprechend großer Leuchtdichte erreicht.

Ein dergestalt scharf umrissenes Lichtbündel birgt jedoch in sich eine große Gefahr im Straßenverkehr: Die Seitenerkennbarkeit der Leuchte nimmt erheblich ab. Zu Betrachtungsstandorten, die in einem mehr als nur geringfügig größeren Winkel zur Hauptstrahlrichtung liegen als der maximale Winkel zur Rastermessfläche es erfordert, gelangt nur sehr wenig des abgestrahlten Lichts.

Die große Bedeutung der seitlichen Erkennbarkeit eines Fahrzeugs zeigt sich auch darin, dass sogar Personenkraftwagen oft Seitenleuchten und Seitenblinker haben, obwohl hierzu keine gesetzliche Notwendigkeit besteht.

In Abkehr von der herrschenden Entwicklungsrichtung liegt der vorliegenden Erfindung deshalb die Aufgabe zugrunde, bei einer gattungsgemäßen Leuchte trotz der erforderlichen starken Bündelung des abgestrahlten Lichts immer noch eine gute Seitenerkennbarkeit zu erreichen.

Diese Aufgabe löst eine Leuchte für ein Fahrzeug, insbesondere für ein Motorrad, mit einem Lichtemitter und einem Lichtleitkörper, welcher einen aus dem übrigen Lichtleitkörper in Richtung auf den Lichtemitter hervorragenden Zentralkörper umfasst, wobei der Lichtleitkörper optisch aktiv vor dem Lichtemitter angeordnet ist und einen Einkoppelbereich zur Aufnahme aus der Leuchte abzustrahlenden Lichts aufweist, mit einer Lenkkoppelfläche und einer Difiuskoppelfläche innerhalb des Einkoppelbereichs, wobei die Lenkkoppelfläche zur Aufnahme gerichtet abzustrahlenden Lichts eingerichtet ist und die Diffuskoppelfläche zum Einleiten diffus abzustrahlenden Lichts eingerichtet ist.

Als Lichtemitter kann dabei insbesondere eine LED oder Hochleistungs-LED dienen; ebenso kann der Lichtemitter die Lichtemissionsfläche eines Faserlichtleiters oder ähnliches sein. Der Lichtemitter kann beispielsweise eine kuppelförmige Lichtemissionsfläche haben, so wie dies von LEDs und Hochleistungs-LEDs ebenso wie von Kollimatoren bei Faserlichtleitern bekannt ist.

Der Lichtleitkörper ist ein Körper, welcher Licht einkoppeln und auskoppeln kann, wobei als Anordnung vor dem Lichtemitter zu verstehen ist, dass der Lichtleitkörper im Strahlenweg von dem Lichtemitter längs der Hauptstrahlrichtung, beispielsweise also zwischen dem Lichtemitter und der Rastermessiläche, vorgesehen ist. Der umgrenzte Einkoppelbereich ist dazu vorgesehen, das vom Lichtemitter emittierte Licht möglichst effektiv in den Lichtleitkörper einzukoppeln, um es vorzugsweise an anderer Stelle wieder auszukoppeln, also abzustrahlen.

Dies Erfindung sieht hierbei die Lenkkoppelfläche zumindest zum Teil, vorzugsweise überwiegend oder vollständig, dazu vor, dort eingekoppeltes Licht so zu lenken und wieder abzustrahlen, dass die erforderliche Bündelung erreicht wird und die gesetzlichen Anforderungen in der Rastermessfläche erfüllt werden.

Durch zusätzliches Anordnen der Diffuskoppelfläche kann ein relativ genau bestimmbarer Anteil der innerhalb des Einkoppelbereichs eingekoppelten Lichtgesamtheit dazu abgezweigt werden, Diffus abzustrahlen. Dieses Diffuslicht trifft in den meisten Fällen zwar auch teilweise die Rastermessfläche, kann also auch dazu dienen, kumulativ mit dem gerichteten Licht die gesetzlichen Anforderungen zu erfüllen; vorzugsweise überwiegend sorgt es jedoch für eine Abstrahlung bis hin zu sehr großen Winkeln abweichend von der Hauptstrahlrichtung, so dass eine gute Seitenerkennbarkeit eines Verkehrsteilnehmers mit der erfindungsgemäßen Leuchte erreicht wird. Als derartige Diffuskoppelflächen können auch Flächen, die an sich gezielt beugend oder reflektierend wirken, angesehen werden, wenn diese einen Lichtstrahl derart aufweiten, das hiernach von einem Lichtstrahl als solches nicht mehr gesprochen werden kann. Insbesondere können somit bei den hier vorliegenden geometrischen Größenverhältnissen bzw. bei den hier im Vordergrund stehenden Dimensionen der Fahrzeugleuchten Flächen, die in einer Richtung einen Krümmungsradius kleiner 1 mm, vorzugsweise kleiner 0,9 mm bzw. kleiner 0,8 mm, aufweisen, als Dwhskoppewächen angesehen werden.. Des weiteren sind Kanten oder sonstige derartige Singularitäten, wie Spitzen, Innenkegel oder ähnliches, Diffuskoppelflächen. Ebenso können durch aufgeraute oder angeätzte Flächen Diffuskoppelflächen bereitgestellt werden.

Unter Diffuslicht sei hierbei insbesondere eine Gesamtheit von Strahlengängen verstanden, bei welcher kein Strahlenbündel im eigentlichen Sinne mehr vorliegt. Diffuslicht hat demzufolge keine Hauptstrahlrichtung, im Gegensatz zu dem gelenkten und abgestrahlten Licht, welches in die Lenkkoppelfläche eingekoppelt wird.

Unter dem Einkoppelbereich sei ein räumlich durch Grenzen definierter Flächenbereich verstanden, welcher dazu dient, aus dem Lichtemitter stammendes Licht in den Lichtleitkörper einzukoppeln. Die Grenze des Einkoppelbereichs kann beispielsweise durch eine Grenzkante verkörpert sein oder sich als alternatives Beispiel dadurch ergeben, dass sich der Lichtleitkörper bis in Bereiche erstreckt, in welchen kein Licht vom Lichtemitter mehr auf die Oberfläche des Lichtleitkörpers trifft. Im letzteren Falle ergibt sich am Übergang vom beleuchteten zum nicht beleuchteten Oberflächenabschnitt des Lichtleitkörpers eine Umgrenzungslinie auch an ebenen oder glatt gekrümmten Oberflächen des Lichtleitkörpers beziehungsweise auch über Oberflächenkanten hinweg.

Unter einer Anordnung der Diffuskoppelfläche innerhalb des Einkoppelbereichs sei verstanden, dass die Grenzen der Diffuskoppelfläche zumindest teilweise, vorzugsweise vollständig, innerhalb der Grenzen des Einkoppelbereichs liegen. Die Definition "innerhalb" beziehe sich dabei auf eine Abwicklung der mitunter räumlich angeordneten Fläche von Diffuskoppelffäche beziehungsweise Einkoppelbereich. Da die Diffuskoppelfläche Teilmenge des Einkoppelbereichs ist, ist die räumliche Fläche der Diffuskoppelfläche zugleich auch Teil der räumlichen Fläche des Einkoppelbereichs.

Um eine bestmögliche Ausbeute des vom Lichtemitter emittierten Lichts zu gewährleisten, hat die erfindungsgemäße Leuchte in einer bevorzugten Ausführungsfbrm eine dergestalt umgrenzten Einkoppelbereich, dass dieser den Lichtemitter umgreift. Auf diese Weise kann auch das unterhalb des kuppelförmigen Bereichs am zylinderförnügen Abschnitt der LED emittierte. Licht eingekoppelt werden, wenn der Einkoppelbereich entsprechend weit um den Lichtemitter bzw. dessen Lichtemissionsfläche herumgezogen ist. Bevorzugt kann der Einkoppelbereich bezüglich der Lichtemissionsfläche so angeordnet sein, dass bis zu einem möglichst großen Winkel bezüglich der Hauptstrahlrichtung sämtliches emittiertes Licht den Einkoppelbereich und gegebenenfalls noch dessen Grenze trifft.

Der Einkoppelbereich sei insbesondere dann als den Lichtemitter umgreifend verstanden, wenn eine Projektion des Einkoppelbereichs auf die Hauptstrahlrichtung mit einer Projektion des Lichtemitters bzw. dessen Lichtemissionsfläche auf die Hauptstrahlrichtung eine I7berschneidung ergibt. Bevorzugt ist die Umgreifung so stark, dass die Projektion der Lichtemissionsfläche vollständig innerhalb der Projektion des Einkoppelbereichs liegt, worunter auch fallen soll, dass die projizierten Grenzen einseitig oder sogar beidseitig identisch liegen.

An der Grenzkante des Einkoppelbereichs kann Licht zwar auch diffus reilektiert werden. Es liegt jedoch im Wesen einer äußeren Grenze des Einkoppelbereichs, dass sie bei koaxialer Anordnung des Lichtleiters vor dem Lichtemitter von der Hauptstrahlrichtung weiter entfernt liegt als in der Regel zumindest der überwiegende Teil des Einkoppelbereichs. Dort wird normalerweise weniger Licht vom Lichtemitter emittiert als in der Nähe der Hauptstrahlrichtung. Wenn der Einkoppelbereich den Lichtemitter darüber hinaus weit umgreift, die Grenzkante des Einkoppelbereichs also fernab von der Hauptstrahlrichtung und bestenfalls sogar auf der leuchtrichtungsabgewandten Seite des Lichtenütters liegt, so trifft in der Regel nur sehr wenig Licht auf die Grenzkante des Einkoppelbereichs. Daher wird bei Einkopplung vielen Lichts nach dem Stand der Technik wie beispielweise nach der DE 100 36 323 A1 nur wenig Diffuslicht erzeugt.

Mehr Diffuslicht wird an der Grenzkante des Einkoppelbereichs der Fahrzeugleuchte nach der ES, 0 780 265 A2 erzeugt. Das liegt jedoch schlicht daran, dass hier eine kleine Einkoppelfläche im Strahlengang in der Hauptstiahlrichtung angeordnet ist. Hierdurch geht nachteilig ein erheblicher Anteil des emittierten Lichts am Einkoppelbereich vorbei und kann nicht kontrolliert vom Lichtleiter geführt und abgestrahlt werden.

Von den bisherigen unschönen Alternativen, entweder viel Licht einzukoppeln - dabei aber nur wenig Diffuslicht zu erhalten - oder aber insgesamt nur wenig Licht einzukoppeln, um stärkeres Streulicht zu erhalten, kann sich die vorliegende Erfindung wie erläutert befreien.

Alternativ und kumulativ zum Umgreifen des Lichtemitters ist es von Vorteil, wenn bei der erfindungsgemäßen Leuchte die Lenkkoppelfläche und/oder die Diffuskoppelfläche mehrere Teilflächen innerhalb des Einkoppelbereichs aufweisen. Eine Aufteilung zu mehreren Lenkkoppelteilflächen und/oder Diffuskoppclteilflächen zum Einkoppeln des zur jeweiligen Abstrahlung vorgesehenen Lichts ermöglicht große Freiheiten bei der Gestaltung der Geometrie des Einkoppelbereichs und auch des restlichen Lichtlenkkörpers.

Zur Erzielung eines gewünschten Strahlengangs kann unabhängig hiervon auch ein Reflektor vorhanden sein, der insbesondere mit der Lenkkoppelfläche optisch zusammenwirkt. Bei mehreren Lenkkoppelteilflächen kann dieser Vorteil schon erreicht werden, wenn mindestens eine Lenkkoppelteilfläche mit dem Reflektor optisch zusammenwirkt. Licht, welches über die Diffuskoppelfläche bzw. Diffuskoppelteilflächen eingekoppelt wird, wird meistens zumindest teilweise auch den Reflektor treffen. Der Reflektor kann aber beispielsweise alleinig für die Strahlengänge gerichtet abzustrahlenden Lichts berechnet und geformt sein. Um nicht zuviel Lichtintensität des gerichtet abzustrahlenden Lichts durch übermäßige Abzweigung zu Streulicht zu verlieren, wird darüber hinaus vorgeschlagen, dass nur ein einziger Reflektor vorliegt. Bei einer Projektion der Reflexionsflächen, welche mit der Lichtlenkung optisch zusammenwirken, auf die Hauptstrahlrichtung soll also zumindest ein Abschnitt in der Projektion vorliegen, welcher nur von einer einzigen Reflexionsfläche herrührt. Es sei erwähnt, dass als Reflektor sowohl eine verspiegelte Fläche als auch eine nicht verspiegelte Fläche dienen kann - im zweiten Falle beispielsweise reflektierend durch das physikalische Phänomen der Totalreflexion.

Ein Reflektor kann insbesondere im Wesentlichen eine Kegelform haben, welche sich von dem Lichtemitter zur Abstrahlfläche der Leuchte hin aufweitet, wobei an der kleineren Seite des Kegels zentral der Lichtemitter innerhalb des Kegels vorgesehen ist. Bei Versuchen hat sich herausgestellt, dass eine Neigung des Mantels des Kegels gegenüber der Hauptstrahlrichtung von etwa 30 ° besonders geeignet ist. Es sei darauf hingewiesen, dass die Mantelfläche nicht exakt kegelmantelförmig geformt sein muss; vielmehr ist eine vorteilhafte großflächige Bündelung des gerichtet abzustrahlenden Lichts zu beobachten, wenn die Mantelfläche im Querschnitt einen gekrümmten Verlauf aufweist, welcher sie nach außen wölbt. Der Mantel kann insbesondere einen Krümmungsradius von etwa 110 mm haben.

Um bei der erfindungsgemäßen Leuchte den Strahlengang möglichst gezielt beeinflussen zu können, ist es alternativ und kumulativ von Vorteil, wenn die Lenkkoppelfläche bzw. mindestens eine Teilfläche hiervon zum Brechen vom Lichtemitter kommenden Lichts eingerichtet ist. Die Brechung kann beispielsweise eine Bündelung des Lichts bewirken. Insbesondere lassen sich die gesetzlich vorgegebenen Messwerte durch gezieltes Brechen zumindest des zur Aufnahme gerichtet abzustrahlenden Lichts eingerichteten Lenkkoppelfläche einfacher bewirken.

Unabhängig hiervon wird vorgeschlagen, dass die Difuskoppelfläche bzw. mindestens eine ihrer Teilflächen innerhalb der Lenkkoppelfläche bzw. innerhalb mindestens einer der Lenkkoppelteilflächen angeordnet ist. Dies kann unter vielen Umständen vorteilhaft sein. Beispielsweise kann vom Lichtemitter bis zu einem bestimmten Grenzwinkel bezüglich der Hauptstrahlrichtung emittiertes Licht - gewissermaßen ein Zentrallichtbündel - mit einer geeigneten Optik besonders einfach gerichtet abstrahlbar sein. In den meisten Fällen ist es dann unter wenig Abweichung von grundlegenden Linsenformen oder auch Reflektorformen möglich, das eingekoppelte Licht des Zentrallichtbündels relativ gleichmäßig und gezielt nach vorne aus dem Lichtlenkkörper abzustrahlen. Bei einem bestimmten Zwischenwinkel wird sich ein Minimum von-Bündelungsfähigkeit zur gerichteten Abstrahlung ergeben. Um diesen Zwischenwinkel herum kann es beispielsweise Sinn machen, eine Diffuskoppelfläche anzuordnen. Vorteilhaft können Diffuskoppelflächen daher angeordnet sein in Laufstrecken des Lichts innerhalb des Lichtleitkörpers zu Kanten, Ecken, Unregelmäßigkeiten, Begrenzungen oder ähnlichem des Lichtleitkörpers, beispielsweise zu der Abstrahlseite zugewandten Endkanten eines am Lichtlenkkörper angeordneten Reflektors.

Vom Lichtemitter in größerer Abweichung als dem Zwischenwinkel emittiertes Licht kann dann wieder besser lenkbar und/oder besser bündelbar sein als im Zwischenwinkel emittiertes Licht. So kann hier noch eine Lenkkoppelffäche bzw. mindestens eine Teilfläche hiervon angeordnet sein. Insbesondere kann noch eine Lenkkoppelfläche bzw. mindestens eine Teilfläche hiervon in einem Winkel bezüglich der Hauptstrahlrichtung angeordnet sein, welcher größer ist als ein maximaler Winkel, in dem noch die Diffuskoppelfläche bzw. noch zumindest eine Teilfläche hiervon vorhanden ist.

Bei Anordnung einer Diffuskoppelfläche innerhalb der Lenkkoppelfläche in beschriebener Weise ist es von besonderem Vorteil, wenn die Diffuskoppelfläche als Übergang, insbesondere als Übergangskante, zwischen an sie angrenzenden Teilflächen der Lenkkoppelfläche ausgestaltet ist. In aufwändigen Versuchen hat sich herausgestellt, dass es für eine ausreichende Seitenerkennbarkeit oft schon ausreichend ist, wenn eine relativ kleine Di$uskoppelfläche vorhanden ist. Die Fläche kann sogar mathematisch die Breite Null annehmen, so dass sie zu einer Kante wird. Physikalisch hat eine solche Kante zwischen zwei Teilflächen der Lenkkoppelfläche in den überwiegenden Fällen immer noch eine ausreichende Flächenhaßigkeit, um eine gut sichtbare Menge des hier ankommenden Lichts diffus zu streuen. Dementsprechend kann auch eine Übergängskante mit einem sehr kleinen Radius als Diffuskoppelfläche dienen.

Um eine möglichst gute Bündelung des gerichtet abzustrahlenden Lichts zu erreichen, ist bei einer vorteilhaften Ausführungsform der Leuchte in einem Hauptstrahlbereich des Lichtemitters eine Sammeloptik angeordnet. Hierdurch wird bereits bei Einkopplung des Lichts in den Lichtleitkörper der Strahlengang gezielt beeinflusst. Somit kann einerseits ein bestimmter angestrebter Strahlengang mit geringerer Abhängigkeit von der Geometrie der Abstrahlfläche erreicht werden. Andererseits kann der Lichtleitkörper auch freier und insbesondere kleiner geformt werden, da eine zusätzliche Brechungsfläche genutzt wird. Als Hauptstrahlbereich sei ein räumlicher Winkelbereich bezüglich der Hauptstrahlrichtung - ausgehend vom Lichtemitter - verstanden. Bei LEDs beispielsweise kann als Hauptstrahlbereich ein Winkelbereich von etwa 40 ° Abweichung um die Hauptstrahlrichtung angenommen werden, wobei der Hauptstrahlbereich einen Kernhauptsrrahlbereich von etwa 20 ° Abweichung um die Hauptstrahlrichtung umfasst. In diesem Bereich wird üblicherweise etwa 80 % des gesamten LED Lichts emittiert.

Es sei ausdrücklich darauf hingewiesen, dass die Sammeloptik nicht notwendigerweise den gesamten Hauptstrahlbereich überspannen muss. Vielmehr kann innerhalb des Hauptstrahlbereichs auch eine Verteiloptik zum gezielten Auseinanderlenken gerichtet abzustrahlenden Lichts vorgesehen sein. Auch diese dient in diesem Fall vorzugsweise als Teil der Lenkkoppelfläche. Um keine zu große Bündelung des gezielt abzustrahlenden Lichts im Winkelbereich der Hauptstrahlrichtung zu erreichen und hierbei eine Unterbelichtung der Seiten zu erhalten, weist eine besonders bevorzugte Ausfühnmgsform der vorgeschlagenen Leuchte im Hauptstrahlbereich eine Sammeloptik und etwa im Kernhauptstrahlbereich eine Verteiloptik auf. Diese ist bevorzugt konzentrisch innerhalb der Sammeloptik angeordnet. Der Übergang zwischen dem Sammelbereich und dem Verteilbereich kann scharfkantig oder mit sehr kleinem Übergangsradius ausgebildet sein, um eine weitere Diffuskoppelfläche bereitzustellen.

Eine Verteiloptik kann vorteilhaft als Kegelstumpf, Kegel, Kugelbereich oder als eine Kombination dieser oder ähnlicher Formen am Licht leitenden Zentralkörper eines Leuchtenvorsatzes mit einer bezüglich des Lichtemitters konkaven Ausrichtung angeformt sein. Konkav ausgerichtete Lenkkoppelflächen der Verteiloptik weiten das Lichtbündel beim Einkoppeln in den Lichtleitkörper auf und ermöglichen es auf diese Weise, die von der Leuchte emittierte Lichtdichte homogener zu verteilen. Die große Bündelung des beispielsweise von einer LED emittierten Lichts um ihre Kernhauptstrahlrichtung kann so mit einfachen Mitteln abgeschwächt werden, und das abgezweigte Licht dazu verwendet werden, benachbarte Bereiche aufzuhellen. Auf diese Weise kann kostengünstig eine stark gerichtete Lichtabstrahlung, wie diese insbesondere bei Hochleistungs-LEDs auftritt, homogenisiert und an die Erfordernisse bei Blinkern angepasst werden.

Um die Seitenerkennbarkeit der Leuchte noch weiter zu erhöhen, kann die Leuchte eine Randleuchtfläche zum Abstrahlen von Diffuslicht aufweisen. Als Randleuchtfläche kann insbesondere eine Fläche dienen, die um eine zentrale Abstrahlfläche zum Abstrahlen von gelenktem, gebündeltem Licht herum angeordnet ist oder zumindest direkt an diese grenzt. Eine Randleuchtfläche vergrößert die absolute Fläche, aus welcher Diffuslicht austritt.

Insbesondere in Verbindung mit einer Randleuchtfläche, aber auch unabhängig hiervon, wird vorgeschlagen, dass eine Abstrahlfläche gewölbt ist. Insbesondere sei hier eine konvexe Wölbung gemeint, also eine Wölbung, welche zum Äußeren der Leuchte hin verläuft. Durch eine konvexe Wölbung erhält die Leuchtfläche zu ihren Rändern hin eine zu den Seiten weisende Oberflächenkomponente. Vor allem Diffuslicht wird demzufolge beim Austritt aus der Leuchtfläche auch in weit außerhalb der Hauptstrahlrichtung liegende Richtung emittiert. Zudem kann die Bündelwirkung der konvexen Optik dazu genutzt werden, eine verstärkte Bündelung des gerichtet abzustrahlenden Lichts zu erreichen.

Als weiteres alternatives oder zusätzliches Mittel zum Umlenken von Licht in weit außerhalb der Hauptstrahlrichtung liegende Richtungen, ist bei einer bevorzugten Ausfiihrungsform der vorgeschlagenen Leuchte eine Umlenkanformung an der Abstrahlfläche der Leuchte vorgesehen. Die Umlenkanformung soll aus der eigentlichen glatten Abstrahlfläche nach außen hervorstehen. Auf diese Weise kann durch eine geeignete Geometrie in der Umlenkanformung ein Lichtstrahl bis in Richtungen praktisch parallel zur Abstrahlfläche ungestört ausgestrahlt werden. Aus Gründen der Wirtschaftlichkeit sollte die Umlenkanformung einstückig mit der übrigen.Abstrahlfläche ausgebildet sein.

Eine außen an der Abstrahlfläche der Leuchte vorgesehene Umlenkanformung sollte aus mehreren Gründen so klein wie möglich ausgebildet sein. Neben einer etwaigen optischen Beeinträchtigung der ansonsten glatten Blinkeroberfläche ist hier insbesondere eine erhöhte Verletzungsgefahr zu nennen, wenn scharfkantige Anformungen über einer kritischen Größe vorgesehen sind. Um auch für eine kleine Umlenkanformung so viel Licht bereitzustellen, dass ein guter Umlenkeffekt zur Erhöhung der Seitensichtbarkeit des Fahrzeugs erfolgt, wird vorgeschlagen, dass die Umlenkanformung im Hauptstrahlbereich der Leuchte positioniert ist. Insbesondere kann eine Umlenkanformung vor dem Einkoppelbereich positioniert sein. Hierunter wird verstanden, dass die Umlenkanformung bei einer gemeinsamen Projektion mit dem-Einkoppelbereich auf eine senkrecht zur Hauptstrahlrichtung liegende Ebene zumindest teilweise eine Überschneidung ergibt.

Eine Umlenkanformung kann in vielfältigen Formen vorliegen. Neben zahlreichen inselartigen Ausgestaltungen kann vorteilhaft auch eine prismenförmige Naht auf der Abstrahlfläche angeformt sein. Diese kann bevorzugt eine erste Wand zumindest in etwa senkrecht zur Abstrahlfläche und eine zweite Wand mit einer Neigung zwischen etwa 20 und etwa 70 ° zur Abstrahlfläche aufweisen. Eine senkrecht zur Abstrahlfläche stehende Wand der Umlenkanformung beeinflusst den Strahlengang des gerichtet abzustrahlenden Lichts möglichst wenig. Demgegenüber zweigt die stark geneigte Wand eine gezielte Menge aus dem gerichtet abzustrahlenden Licht ab und lenkt dieses um. Hierbei ist es von Vorteil, wenn die geneigte Wand im Verhältnis zum Strahlengang des gerichteten Lichts so vorgesehen ist, dass eine Totalreflexion auftritt. Je nach konkreter Gestaltung des Strahlengangs und wenn die Umlenkanformung an einer Randleuchtfläche positioniert ist, können auch Neigungswinkel einer geneigten Fläche von mehr als 70 Grad erforderlich werden. Für die meisten Anwendungsfälle, insbesondere aber bei Positionierung der Umlenkanformung im Hauptstrahlbereich, ist der angegebene Winkelbereich allerdings besonders geeignet.

Wesentliche Eigenschaft einer geeigneten Umlenkanformung ist es, dass sie mindestens eine Fläche aufweist, die zum Brechen und/oder Reflektieren von Licht geeignet und so eingerichtet ist, dass zur Abstrahlseite der Leuchte hin geleitetes Licht in eine von der Hauptstrahlrichtung bevorzugt weit abweichende Richtung, vorzugsweise zumindest um mehr als 45°, umgelenkt und dementsprechend emittiert wird. Hierzu eignet sich besonders eine aus der Abstrahlfläche hervorstehende Anformung mit mindestens einer schräg zur Abstrahlfläche stehenden Wand. Beispielsweise kann als eine inselartige Umlenkanformung auch ein auf die Abstrahlfläche angeformter Tetraeder oder Pentaeder gewählt werden.

Bevorzugt ist die Umlenkanformung scharfkantig an die Abstrahlfläche angeschlossen und/oder weist scharfkantige Wandübergänge auf. Hierdurch wird eine diffuse Lichtverteilung genau in demjenigen Bereich noch verstärkt, welcher ohnehin durch Anordnung der Urrilenkanformung dazu vorgesehen ist, Licht nicht gerichtet nach vorne, sondern auch in hiervon weit abweichende Richtungen zu emittieren.

Es sei betont, dass bei Fahrzeugblinkern eine gewölbte Abstrahlfläche zum Abstrahlen von Diffuslicht ebenso wie eine hierzu dienende Randleuchtfläche - insbesondere aber die Zusammenwirkung von einer gekrümmten Abstrahlfläche und einer Randleuchtfläche, vor allem bei gleichzeitigem Vorsehen einer Umlenkanformung - auch für sich genommen unabhängig von den anderen Merkmalen vorliegender Erfindung vorteilhaft und erfinderisch ist

Die genaue Positionierung des Lichtemitters relativ zum Lichtleitkörper kann von entscheidender Bedeutung zum Erreichen der gesetzlich vorgeschriebenen Lichtintensitäten sein. Bei herkömmlichen Leuchtensystemen, in welchen die Erfindung auch ausgeführt sein kann, ist der Lichtemitter körperlich unabhängig von dem Lichtleitkörper. Hierdurch können zwar Lichtemitter und Lichtleitkörper unabhängig voneinander ausgetauscht werden, beispielsweise wenn einer der beiden schadhaft ist; bei auch nur geringfügig falscher Anordnung durch den das jeweilige Element Wechselnden kann es jedoch leicht geschehen, dass die Elemente geringfügig falsch zueinander positioniert werden und hierdurch die gesetzlich vorgeschriebenen Lichtintensitäten der Leuchte nicht mehr erfüllt werden. Daher stellt sich unabhängig vom Vorgenannten die Aufgabe, diese Gefahrenquelle auszuschließen.

Diese Aufgabe wird gelöst durch eine unlösbare Verbindung zwischen dem Lichtleitkörper und dem Lichtemitter. Hierdurch können beide Elemente bereits werksseitig mit entsprechend hoher Präzision verbunden werden und auch bereits in dieser nicht änderbaren Anordnung zueinander getestet werden. Der Endverbraucher unterliegt so nicht dem Risiko, die Leuchte erfülle eventuell nicht die gesetzlichen Anforderungen.

Es sei betont, dass eine unlösbare Verbindung zwischen einem Lichtleitkörper und einem Lichtemitter bei einer Motorradleuchte, insbesondere bei einem Motorradblinker, auch unabhängig von sämtlichen anderen Merkmalen vorliegender Erfindung vorteilhaft und erfinderisch ist, da diesbezüglich am ehesten auch Nicht-Fachleute arbeiten und somit das Risiko eines unsachgemäßen Leuchteneinbaus wesentlich höher ist und da bei Motorrädern naturgemäß wenig Bauraum für Justiereinrichtungen verbleibt.

Um die Austauschbarkeit insbesondere hinsichtlich einer etwaigen falschen Verpolung einer LED zu vermeiden, kann zudem vorteilhaft eine elektrische Regelschaltung für die LED untrennbar am Verbund aus Lichtleitkörper und Lichtemitter befestigt sein. Solche Regelschaltungen werden unter anderem benötigt, um der LED eine möglichst konstante Spannung zur Verfügung zu stellen.

Beim Betrieb einer Fahrzeugleuchte mit einer LED oder insbesondere einer Hochleistungs-LED kann sich zudem ein weiteres Problem ergeben: Diese Halbleiterlichtquellen haben zur Zeit lediglich eine Lichtausbeute von ca. 40 bis 60 % der zugeführten Energie. Der Rest der Energie fällt als Wärme am Halbleiter an. Insbesondere bei Verwendung von LEDs oder Hochleistungs-LEDs in einer Fahrzeugleuchte stellt sich daher die Aufgabe, die hier anfallende Wärme möglichst effektiv vom Lichtemitter abzuführen.

Diese Aufgabe wird gelöst durch eine Wärmebrücke zwischen dem Lichtemitter und einem Leuchtengehäuse. Fahrzeugleuchten sind üblicherweise von einem Gehäuse umgeben. Dieses hat gegenüber dem Lichtemitter eine erheblich größere Oberfläche, sodass eine Ableitung der Wärme vom Lichtemitter zum Gehäuse meist gut möglich ist. Insofern können sogar Gehäuse mit relativ niedriger Wärmekapazität aufgrund ihrer um Dimensionen größeren Fläche problemlos die anfallende Wärme vom Lichtemitter abfließen lassen. Auch treten bei entsprechender Verteilung am Gehäuse keine allzu hohen Temperaturen auf, welche sonst eine Verletzungsgefahrenquelle darstellen könnten.

Unter einer Wärmebrücke soll dabei jedweder Flussweg für Wärme vom Lichtemitter zum Gehäuse verstanden werden, welcher einen geringeren oder vorzugsweise erheblich geringeren Wärmeleitwiderstand aufweist als dies bei Anordnungen nach dem Stand der Technik bekannt ist.

Beispielsweise haben Hochleistungs-LEDs üblicherweise eine interne Wärmeableitung zu einer Rückseite des kuppelförmigen Elements der Hochleistungs-LED. Dort weisen sie eine beispielsweise metallene Kühlfläche auf. Die Kühlfläche kann nahezu den gesamten Bodenbereich einer solchen Hochleistungs-LED ausmachen. Dennoch erfolgt bei Einsatz in einer Fahrzeugleuchte nach dem Stand der Technik keine über die Bodenkühlfläche hinausgehende forcierte Ableitung der Wärme, sondern meist nur eine Abstrahlung der Wärme beispielsweise zu einer Leiterkarte. Auch sind innerhalb der Fahrzeugleuchte üblicherweise nur geringe Luftströmungen vorhanden, so dass oft ein isolierendes Luftpolster an der Kühlfläche am Boden der Hochleistungs-LED existiert. Bei Anschluss eines als Wärmebrücke dienenden Bauelements an einer solchen Kühlfläche und bei Verbindung dieses Bauelements mit dem Gehäuse der Fahrzeugleuchte tritt erheblich mehr Wärmeabführung auf.

Dabei ist es von Vorteil, wenn die Wärmebrücke einen elastischen Kontakt, insbesondere eine metallene Feder, aufweist. Im eingebauten Zustand des Lichtemitters in das Leuchtengehäuse soll die Wärmebrücke gegen das Gehäuse und/oder gegen die Hochleistungs-LED vorzugsweise elastisch vorgespannt sein, so dass auch bei dynamometrischen Belastungen während des Fahrbetriebs des Fahrzeugs die Verbindung zwischen der Wärmebrücke und dem Lichtemitter nicht abreißt. Das Herstellen der Verbindung über einen vorgespannten elastischen Kontakt erübrigt dabei aufwändigere Verbindungsweisen wie beispielsweise Verlöten oder Verschrauben.

In einer bevorzugten Ausfiihrungsvariante weist das Leuchtengehäuse selbst einen metallenen Kühlbereich auf. Die Wärmebrücke kann dann gehäuseseitig bevorzugt direkt an den metallenen Kühlbereich am Leuchtengehäuse angeschlossen sein. Ein metallener Kühlbereich am Leuchtengehäuse sorgt selbst bei relativ punktuellem Einleiten der vom Lichtemitter abgeführten Wärme für eine bestmöglich flächige und somit gleichmäßige Verteilung der Wärme am Gehäuse. Hierdurch wird nicht nur eine besonders gute Kühlung erreicht, sondern auch mögliche Gefahrenquellen für eine Verletzung durch zu große Wärme ausgeschlossen oder zumindest reduziert. Für eine weitergehende Kühlung können zudem auch zusätzliche Kühlmittel direkt oder indirekt, also über eine Wärmebrücke, am Lichtemitter angeschlossen sein.

Es sei betont, dass die Anordnung einer Wärmebrücke zwischen einem Lichtemitter und einem Leuchtengehäuse bei einer Fahrzeugleuchte, insbesondere bei einer Motorradleuchte, unabhängig von anderen Merkmalen vorliegender Erfindung auch für sich genommen vorteilhaft und erfinderisch ist. Je nach konkreter Umsetzung kann es eine solche Wärmebrücke ermöglichen, eine LED mit einer wesentlich höheren Eingangsleistung blinken zu lassen als es deren normalen Betriebsbedingungen entspricht. Hierdurch lässt sich die Lichtausbeute steigern, so dass insbesondere auch kostengünstigere LEDs zur Anwendung kommen können.

Während vierrädrige Fahrzeuge meist noch relativ große Leuchten haben - diese werden zunehmend als Gestaltungselemente miteinbezogen -, so stoßen bei Motorrädern besonders kleine Leuchten auf besondere Akzeptanz. Unabhängig von sämtlichen vorgenannten Merkmalen vorliegender Erfindung und auch kumulativ hierzu wird zum Ermöglichen eines besonders kleinen Leuchtengehäuses vorgeschlagen, dass eine Regelschaltung außerhalb des Leuchtengehäuses im Fahrzeug angeordnet ist. LEDs beispielsweise reagieren relativ empfindlich auf Spannungsschwankungen. Daher ist regelmäßig eine Regelschaltung zum Betreiben von LEDs notwendig. Bei Motorrädern ergibt sich dieses Erfordernis in besonders hohem Maße, weil die Bordspannungsversorgung eines Motorrads großen Schwankungen unterliegt. Durch Anordnen der Regelschaltung außerhalb des Leuchtengehäuses, beispielsweise in einem hohlen Griffstück des Motorrads oder unterhalb seines Chassis', können erhebliche Raumeinsparungen für den außen sichtbaren Bereich des Blinkers erreicht werden.

Zugleich wird die Wärmeleistung innerhalb des Leuchtengehäuses reduziert. Bei einem derzeit handelsüblichen Blinker kann die Wärmleistung allein der Regelschaltung leicht fünf bis sechs Watt ausmachen. Daher ist es auch vorteilhaft, wenn zwischen der Regelschaltung und einem großflächigen Kühlelement eine Wärmebrücke besteht.

Unabhängig vom Vorgenannten stellt sich auch die Aufgabe, eine Leuchte für ein Fahrzeug, insbesondere für ein Motorrad, dort insbesondere einen Motorradblinker, möglichst klein auszuführen. Beim Motorrad werden durch die kleine Ausführung unter anderem aerodynamische Vorteile erreicht. Beispielsweise pfeift die Luft beim Umströmen größerer Leuchten und Blinker oft oberhalb einer bestimmten Geschwindigkeit. Dieses Pfeifen irritiert den Fahrer. Möglichst kleine Leuchten und Blinker tragen so auf einfache Weise zur Verkehrssicherheit bei, ohne dass aufwendige Strömungsoptimierungen an der Gehäuseform nötig werden. Zum Erreichen eines möglichst kleinen Gehäuses wird vorgeschlagen, dass nur eine einzige LED als Lichtquelle im Gehäuse angeordnet ist.

Dennoch hat auch bei sehr kleiner Ausführung die Leuchte immer eine gewisse flächige Ausdehnung quer zur Hauptstrahlrichtung. Dies ergibt sich schon dadurch, dass es vorteilhaft ist, die Leuchtfläche nicht so klein auszuführen, dass ihre gute Erkennbarkeit - insbesondere die Seitenerkennbarkeit - gefährdet wird. Daher hat die Leuchte in einer bevorzugten Ausführungsform eine plane oder zumindest im Wesentlichen plane Platine zum Tragen der Regelschaltung und gegebenenfalls auch der LED, wobei die Platine im Wesentlichen senkrecht zur Hauptstrahlrichtung angeordnet ist. Eine solche Ausführung ist besonders stabil und kostengünstig herstellbar. Zudem kann sie sehr leicht von einem auch Unerfahrenen eingebaut werden, da so möglichst wenige Bauteile vonnöten sind, um die Leuchteinheit in ein Leuchtengehäuse zu installieren. Auch wird eine zwangsweise vorhandene Seitenerstreckung quer zur Hauptstrahlrichtung bestmöglich ausgenutzt und hiermit dazu beigetragen, die Leuchte möglichst klein ausführen zu können.

Bei einer gewölbten Leuchtfläche kann es stattdessen vorteilhaft sein, die Platine gewölbt auszuführen, sie jedoch weiterhin im Wesentlichen senkrecht zur Hauptstrahlrichtung anzuordnen.

Eine besonders gute Raumausnutzung ergibt sich dann, wenn der Raum auch neben der LED genutzt wird. Daher ist es alternativ und kumulativ zum Vorgenannten von Vorteil, wenn die Regelschaltung neben der zugehörigen, also durch die Schaltung angesprochenen LED installiert ist. Unter einer Positionierung "neben der LED" sei eine Positionierung verstanden, bei welcher sich die Projektion der elektronischen Bausteine und/oder der Platine auf die Hauptstrahlrichtung zumindest teilweise, bevorzugt überwiegend oder vollständig, mit der Projektion der LED - und gegebenenfalls auch ihrer Leuchtkuppel - schneidet.

Unabhängig von der Form der Abstrahlfläche und der relativen Anordnung zur LED ist es bevorzugt, wenn die Regelschaltung hinter der Abstrahlfläche angeordnet ist. Unter einer Anordnung "hinter" der Abstrahlfläche sei verstanden, dass die elektronischen Komponenten der Regelschaltung bei Projektion parallel zur Hauptstrahlrichtung zumindest überwiegend, bevorzugt vollständig innerhalb einer Projektion der Abstrahlfläche liegen. Somit wird es ermöglicht, dass das Leuchtengehäuse in seiner seitlichen Ausdehnung die seitliche Ausdehnung der Abstrahlfläche nicht oder nur unwesentlich überschreiten muss. Die Leuchte kann hierdurch axial sehr klein ausgeführt werden. Beispielsweise kann hierfür sogar die Regelschaltung auf mehrere hintereinander liegende Platinen verteilt werden, wenn die Fläche hinter der Abstrahlfläche nicht zur funktionsgerechten Anordnung der elektronischen Bauteile ausreicht oder wenn beispielsweise eine zu große Packungsdichte der elektronischen Bauteile eine zu große lokale Aufheizung hervorriefe.

Die Erfindung wird nachstehend anhand von Ausführungsbeispielen in der Zeichnung weiter erläutert. Hierin zeigen:
- Figur 1: schematisch eine Anordnung eines Lichtleitkörpers vor einer Hochleistungs-LED mit zwei we- sentlichen Strahlengängen,
- Figur 2: schematisch eine ähnliche Anordnung eines Lichtleitkörpers vor einer Hochleistungs-LED mit einer Vielzahl von Strahlengängen,
- Figur 3: in einer Ansicht ein nicht beanspruchter Bauteil für einen Motorradblinker mit einem Lichtleitkörper zum Vorsetzen vor einen Lichtemitter,
- Figur 4: das Bauteil aus Figur 3 in einem Längsschnitt,
- Figur 5: das Bauteil aus den Figuren 3 und 4 in einer räumlichen Ansicht,
- Figur 6: in einer Ansicht einen nicht beanspruchten Motorradblinker mit einem Gehäuse, einem optischen Vorsatz und einer > Hochleistungs-LED,
- Figur 7: den Motorradblinker aus Figur 6 in einem Längsschnitt,
- Figur 8: den Motorradblinker aus den Figuren 6 und 7 im Querschnitt,
- Figur 9: einen weiteren nicht beanspruchten Motorradblinker mit einer elastischen Kontaktfeder an einer Hochleistungs-LED > in einer Ansicht,
- Figur 10: den Motorradblinker aus Figur 9 in einem Längsschnitt,
- Figur 11: den Motorradblinker aus den Figuren 9 und 10 im Querschnitt,
- Figur 12: in einem Schnitt eine mögliche nicht beanspruchte Anordnung eines Kühlelements an einer Hochleistungs-LED hinter einem optischen Vorsatz für eine Fahrzeugleuchte,
- Figur 13: in einem Schnitt ein nicht beanspruchter Beispielanschluss eines Faserlichtleiters an einem Leuchtenvorsatz gemäß vorliegender Erfindung,
- Figur 14: ein alternatives Bauteil für einen Motorradblinker mit einem Lichtleitkörper zum Vorsetzen vor ein Lichtemitter und
- Figur 15: das Bauteil aus Figur 14 schematisch in einem Längsschnitt gemäß Kennzeichnung in Figur 14 mit einer eingesetzten Hochleistungs-LED und zwei beispielhaft dargestellten Strahlengängen.

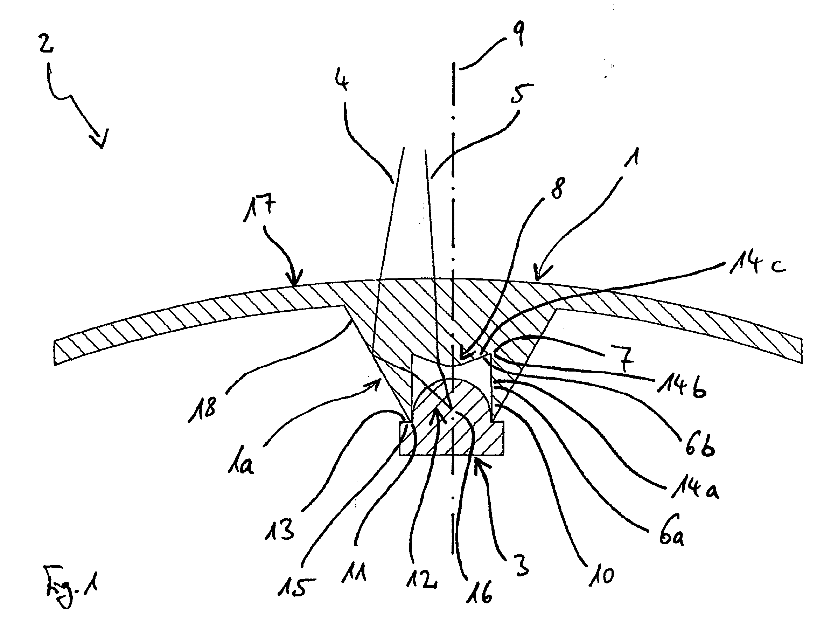

Der Lichtleitkörper 1 der Anordnung 2 in Figur 1 strahlt bei Lichtemission der Hochleistungs-LED 3 auf zwei prinzipiell unterschiedlichen Typen von Strahlengängen Lichtstrahlen 4, 5 gerichtet ab. Hierzu hat der Lichtleitkörper 1 an einem Zentralkörper 1a, welcher aus dem übrigen Lichtleitkörper 1 in Richtung der Hochleistungs-LED 3 hervorragt, eine zweigeteilte Lenkkoppelfläche 6a, 6b. Die Teillenkfläche 6a verläuft zylindrisch und geht an einer Übergangskante 7 in die Lenkkoppelteilfläche 6b über. Diese ist überwiegend kegelstumpfinantelförmig und in einem zentralen Bereich 8 kugelkappenförmig. Die Lenkkoppelfläche 6a,b ist, wie der Zentralkörper 1a, um eine Hauptachse 9, welche gleichzeitig die Hauptabstrahlrichtung der Anordnung 2 ist, symmetrisch. Die ebenfalls rotationssymmetrische Hochleistungs-LED 3 ist hierzu koaxial angeordnet.

Ein Teil 10 der zylindrischen Teillenkfläche 6a verläuft bis an ein hinteres Ende 11 einer Kuppel 12 der Hochleistungs-LED 3 bis zu einer Schulter 13, umgreift also die Kuppel 12 der Hochleistungs-LED 3 vollständig.

Ein Einkoppelbereich 14a,b,c umfasst die Lenkkoppelteilflächen 6a, 6b und die Übergangskante 7, welche als Diffuskoppelfläche fungiert. Der Einkoppelbereich 14a,b,c erstreckt sich bis zu einer Umgrenzungskante 15 des Lichtleitkörpers 1 - gleichzeitig Umgrenzungskante 15 der Teillenläläche 6a. Sämtliche Lichtstrahlen, welche die Kuppel 12 der Hochleistungs-LED 3 verlassen, werden somit vom Einkoppelbereich 14a,b,c in den Lichtleitkörper 1 eingekoppelt.

Lichtstrahlen 4, welche von der Hochleistungs-LED 3 unter einen Winkel emittiert werden, der von der Hauptachse 9 stärker abweicht als ein Grenzwinkel (nicht dargestellt) von einem Halbleiterlichtemitter 16 aus zu der Übergangskante 7, werden vor Erreichen einer Abstrahlfläche 17 nach Einkoppeln in der Lenkkoppelfläche 6a an einem Reflexionsbereich 18 zusätzlich reflektiert. Lichtstrahlen 5, welche in der inneren Lenkkoppelteilfläche 6b der Lenkkoppelfläche 6a,b in den Lichtleitkörper 1 eingekoppelt werden, verlaufen von der Lenkkoppelteilfläche 6b unmittelbar zur Abstrahlfläche 17 des Lichtleitkörpers 1.

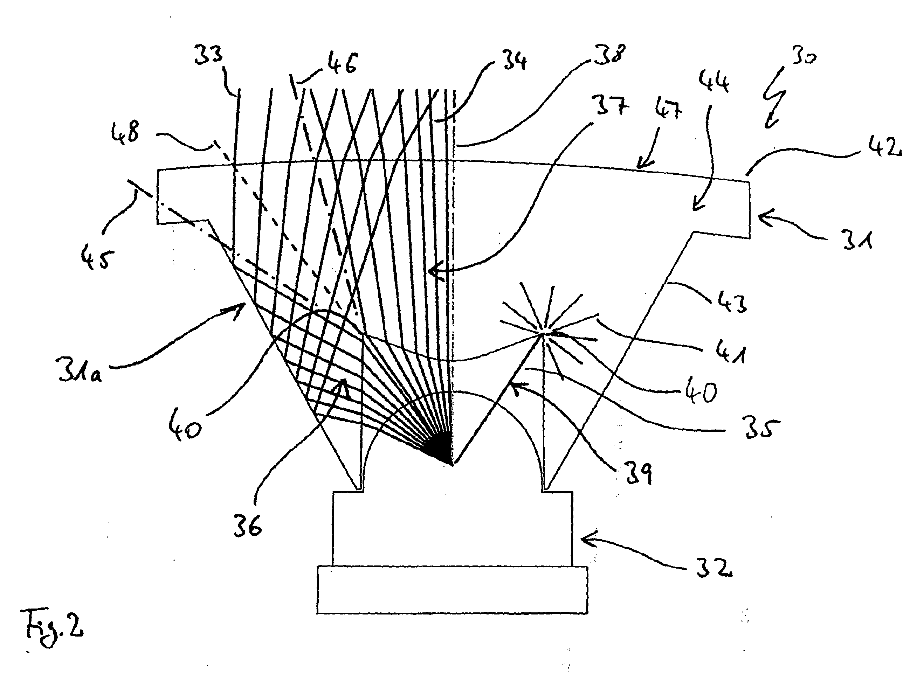

Bezüglich der Anordnung 30 aus Lichtleitkörper 31 und Hochleistungs-LED 32 in Figur 2 sind innerhalb eines Zentralkörpers 31a mehrere Strahlengänge (exemplarisch beziffert mit 33, 34, 35, wobei die Anordnung 30 rotationssymmetrisch ist, aber zur besseren Übersicht Strahlengänge jeweils nur einmal gezeigt sind) dargestellt. Dabei gehören die Strahlengänge 33, 34 zu Scharen 36, 37 mit bzw. ohne Reflexion gerichtet bezüglich einer Hauptstrahlrichtung 38 abzustrahlenden Lichts.

Der Strahlengang 35 gehört zu einer sehr eng umrissenen Schar 39 von Strahlengängen diffus abzustrahlenden Lichts. An einer Übergangskante 40 wird Licht aus dem Strahlengang 35 diffus in den Lichtleitkörper 31 eingekoppelt. Infolgedessen ergeben sich vielfältige Diffusleitrichtungen (exemplarisch beziffert mit 41) innerhalb des Lichtleitkörpers 31, auch außerhalb des Zentralkörpers 31a. Eine Randleuchtfläche 42, welche bezüglich der Hauptstrahlrichtung 38 außerhalb einer Reflexionsfläche 43 liegt, wird von einigen entlang der Diffusleitrichtungen 41 im Lichtleitkörper 31 fortbewegenden Lichtstrahlen erreicht und somit für einen Betrachter der Anordnung beleuchtet. Das Diffuslicht hat keine Bündelung mehr.

Die Reflexionsfläche 43 kann mit einem Spiegelmaterial umgeben sein. Bei geeignetem Material des Lichtleitkörpers 31 und ausreichend spitzem Winkel der Reflexionsfläche 43 gegenüber ankommendem Licht kann jedoch das Phänomen der Totalreflexion ausreichen und ein spiegelndes Material überflüssig werden.

Die Übergangskante 40 ist im Wesentlichen in einem Winkel von der Hochleistungs-LED zu Anschlussbereichen 44 der Randleitfläche 42 bezüglich der Hauptstrahlrichtung 38 angeordnet, da sich zwischen den Scharen 36, 37 gerichtet abzustrahlenden Lichts in Folge der an der Übergangskante 40 sprunghaft ändernden Eintrittswinkel der jeweiligen Lichtstrahlen 33, 34 in den Lichtleitkörper 31 in etwa zwischen Richtungen 45, 46 ein Bereich einstellt, welcher frei von einlaufenden Strahlen 33, 34 gerichtet abzustrahlenden Lichts ist. Ein weit ausmittig auf eine Abstrahlfläche 47 mit großem Winkel zur Hauptstrahlrichtung 38 treffender Streustrahl 48 wird daher nur durch die diffuse Einkopplung erzeugt.

Im vorliegenden Ausführungsbeispiel ist die Übergangskante 40 vom Lichtemitter in einem Winkel von circa 45 ° gegenüber der Hauptstrahlrichtung 38 angeordnet. In Versuchen hat sich ergeben, dass bei vergleichbaren Geometrien von Lichtleitkörpern mit Winkeln zwischen 20° und 70°, vorzugsweise zwischen 35° und 55°, besonders gute Ergebnisse erzielt werden.

Durch Anordnung des Zentralkörpers 31a des Lichtleitkörpers 31 vor der Hochleistungs-LED 32 werden die von der Hochleistungs-LED 32 emittierten Lichtstrahlen 33, 34, 35 optisch aktiv, das heißt im Weg beeinflusst, so geleitet und abgestrahlt, dass bezüglich der Hauptstrahlrichtung 38 in erster Linie durch die achsnahe zentrale Schar 37, aber auch durch die reflektierte Schar 36, Licht relativ stark gebündelt um die Hauptstrahlrichtung 38 an der Abstrahlfläche 47 austritt. Dabei treten überwiegend relativ geringe Winkel bezüglich der Hauptstrahlrichtung 38 auf. Hierdurch ermöglicht der Lichtleitkörper 31 das Bestrahlen der Rastermessfläche mit den gesetzlich vorgeschriebenen Lichtkonzentrationen. Zusätzlich wird insbesondere für stark seitliche Betrachtungsstandorte durch die Streustrahlung 41 eine gute Seitenerkennbarkeit gewährleistet.

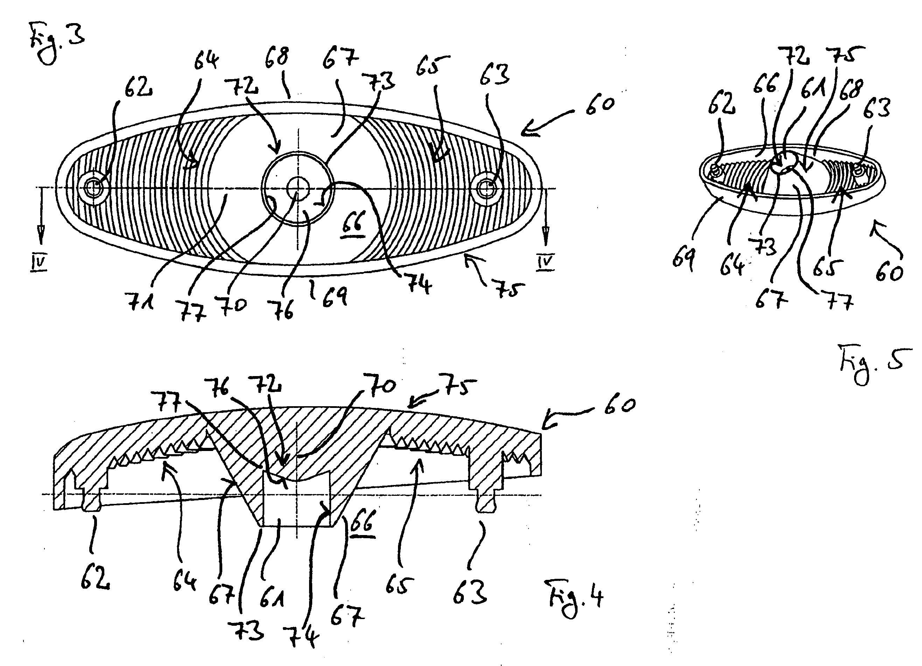

Der Leuchtvorsatz 60 in den Figuren 3, 4, 5 dient zum Vorsetzen vor eine Hochleistungs-LED. Zum automatischen Zentrieren der Hochleistungs-LED ist ein Aufuahmeraum 61 gemäß den Anordnungen aus den Figuren 1 und 2 vorgesehen. Zwei Klemmzapfen 62, 63 sind dazu vorgesehen, in geeignete Aussparungen eingeklemmt oder eingerastet zu werden, um den Leuchtvorsatz 60 beispielsweise an einem Blinkergehäuse oder einer Leiterkarte zu befestigen. In zwei Randleuchtbereichen 64, 65 weist der Leuchtvorsatz 60 an einer Innenseite 66 eine prismenförmige geometrische Struktur auf, um in den Randleuchtbereichen 64, 65 ankommendes Diffuslicht sowie ggf. den Lichtleiter verlassenes Restlicht weiter zu reflektieren und/oder zu brechen, um die Seitenerkennbarkeit weiter zu steigern.

Ein Reflektorbereich 67 des Leuchtvorsatzes 60 ist an Längskanten 68, 69 des Leuchtvorsatzes 60 an diese angeformt und verliert dadurch in diesen Kontaktbereichen seinen rotationssymmetrischen Aufbau um eine Hauptstrahlrichtung 70. Daher eignet sich der Leuchtvorsatz 60 insbesondere dazu, im Betrieb bezüglich einer Querachse 71 im Wesentlichen so eingesetzt zu werden, dass eine Seitenerkennbarkeit entlang der Querachse 71 von Bedeutung ist, also üblicherweise horizontal.

Ein Einkoppelbereich 72 weist hingegen einen symmetrischen Aufbau auf. Bis an eine Umgrenzung 73 heran erstreckt sich eine erste Teilfläche 74 (in Figur 5 nicht beziffert) einer Lenkkoppelfläche zur Aufnahme gerichtet abzustrahlenden Lichts in einem Zentralkörper 75, wobei bei Anordnung einer Hochleistungs-LED innerhalb der Teilfläche 74, also so, dass die erste Teilfläche 74 die Hochleistungs-LED zumindest teilweise umgreift, der Reflektorbereich 67 mit der ersten Teilfläche 74 optisch zusammenwirkt und vor Abstrahlung des Lichts an der ersten Teilfläche 74 eine Brechung und an dem Reflexionsbereich 67 eine Spiegelung des gerichtet abzustrahlenden Lichts erfolgt.

Innerhalb der ersten Teilfläche 74, also von dieser umgeben, ist eine als Übergangskante zwischen der ersten Teilfläche 74 und einer zweiten Teilfläche 76 als Übergangskante 77 ausgestaltete Diffuskoppelfläche 77 vorgesehen.

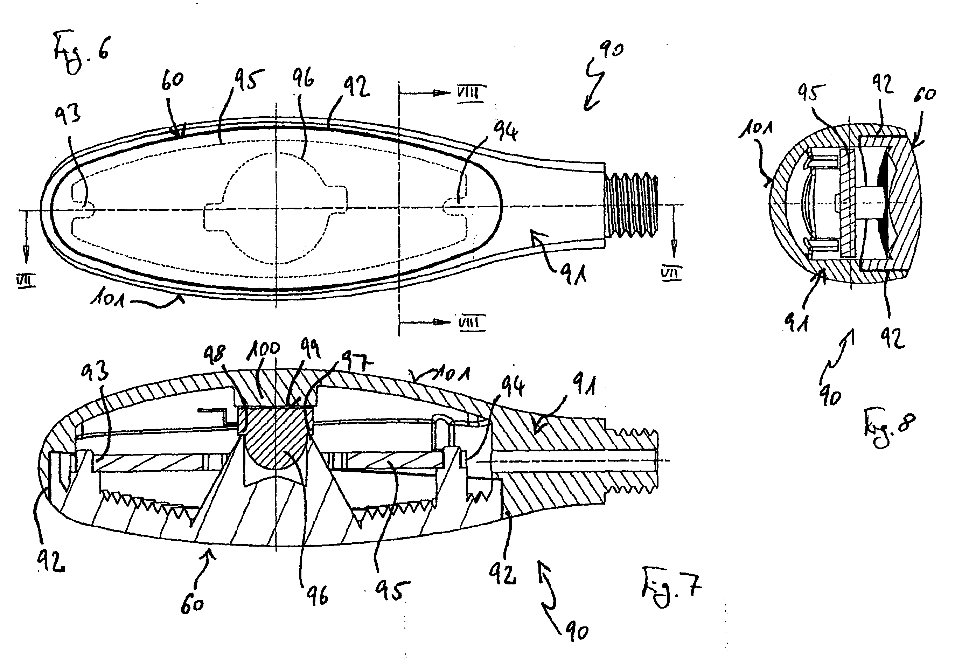

Im Motorradblinker 90 in den Figuren 6, 7 und 8 ist der Leuchtenvorsatz 60 aus den Figuren 3, 4 und 5 an einem Gehäuse 91 verbaut. Bündig abschließend mit einer Aufnahme 92 für den Leuchtenvorsatz 60 ist dieser eingerastet in zwei Aussparungen 93, 94 einer Leiterkarte 95, an welche eine Hochleistungs-LED 96 angeschlossen ist. Dabei ist der Leuchtenvorsatz 60 durch Verklebung einer Aufsitzkante 97 des Leuchtenvorsatzes 60 auf eine Schulter 98 der Hochleistungs-LED 96 mit dieser unlösbar verbunden. Eine solche unlösbare Verbindung ist nicht notwendig, ermöglicht jedoch eine dauerhaft fixierte optimale Ausrichtung der Hochleistungs-LED 96 zum Leuchtenvorsatz 60.

Vorteilhaft kann auch die Leiterkarte 95 mit einer aufgesetzten Regelschaltung (nicht dargestellt) zum Betrieb der Hochleistungs-LED 96 untrennbar am Verbund aus Leuchtenvorsatz 60 und Hochleistungs-LED 96 befestigt sein. In diesem Fall ergäbe sich eine eigenständige, funktionstüchtige Einheit, welche nur noch an die Spannungsversorgung des Motorrads angeschlossen werden müsste und mit größter Präzision und Verpolungssicherheit direkt eingesetzt werden könnte.

Die Hochleistungs-LED 96 liegt im gezeigten Beispiel mit einer rückwärtigen Kühlbodenfläche 99 mit flächigen Kontakt auf einem gehäuseseitigen Wärmekontaktsockel 100, welcher wie der überwiegende Rest des Gehäuses 91 aus Metall gefertigt ist. Dies ermöglicht eine schnelle Wärmeableitung von der Kühlbodenfläche 99 der Hochleistungs-LED 96 zu einer großen Kühlfläche 101 am Gehäuse 91.

Um den flächigen Kontakt zwischen der Kühlbodenfläche 99 und dem Wärmekontaktsockel 100 möglichst zuverlässig auch unter dynamischer Belastung zu erreichen, kann die Hochleistungs-LED auch mit Vorspannung gegen den Wärmekontaktsockel 100 gehalten werden. Hierzu kann beispielsweise die Aufnahme 92 am Motorradblinker 90 so eingerichtet sein, dass der Leuchtenvorsatz 60 nur unter Vorspannung in eine Einrastposition gebracht werden kann; alternativ könnte der Leuchtenvorsatz 60 beispielsweise nicht in die Leiterkarte 95 eingerastet sein, sondern in alternative Rastaufnahmen am Gehäuse 91, welche ebenfalls eine Vorspannung des Leuchtenvorsatzes 60 zum Befestigen im Gehäuse 91 erforderten.

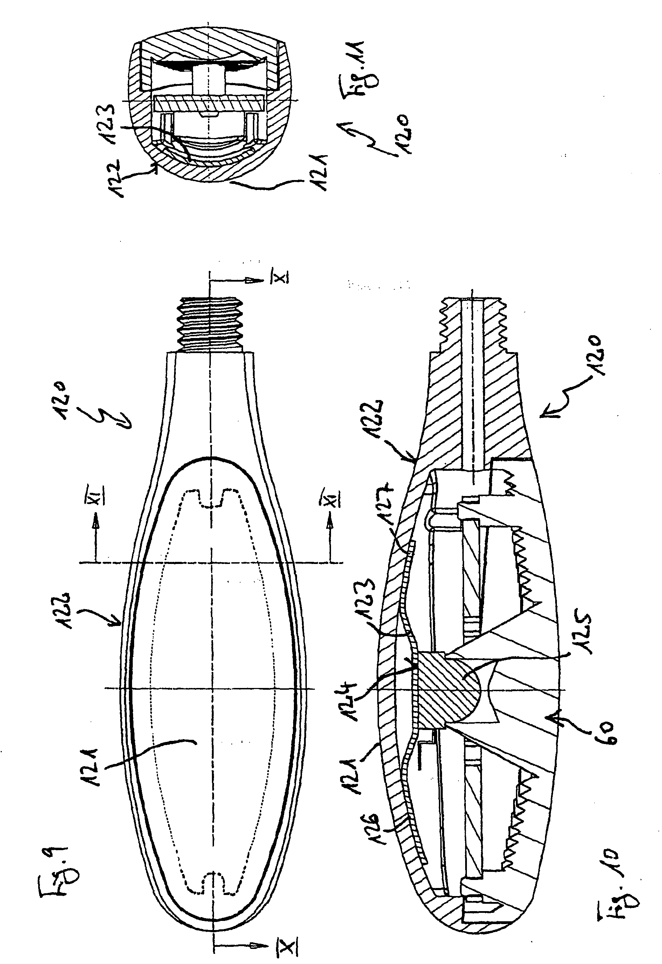

Der weitere Motorradblinker 120 in den Figuren 9, 10 und 11 ist weitgehend identisch mit dem Motorradblinker 90 aus den Figuren 6, 7 und 8. An einer Rückwand 121 eines Gehäuses 122 ist jedoch eine metallene Kontaktfeder 123 als Sitz für eine Kühlbodenfläche 124 einer Hochleistungs-LED 125 vorgesehen. Dies ermöglicht es, auch bei geringer Vorspannkraft des Leuchtenvorsatzes 60 über die Hochleistungs-LED 125 und die Kontaktfeder 123 gegen die Rückwand 121 des Gehäuses 122 einen sicheren Wärmeübergang von der Hochleistungs-LED 125 zum Gehäuse 122 sicherzustellen. Als Kontaktfeder dient dabei im Ausführungsbeispiel ein dünnwandiges, vorgebogenes Blech, welches an Auflagen 126, 127 am metallenen Gehäuse 122 befestigt ist.

Bei den Anordnungen nach den Figuren 6 bis 11 können die Leiterkarten auch außerhalb des Gehäuses angeordnet sein, so dass hierdurch keine weitere Wärmebelastung in dem Gehäuse bedingt ist.

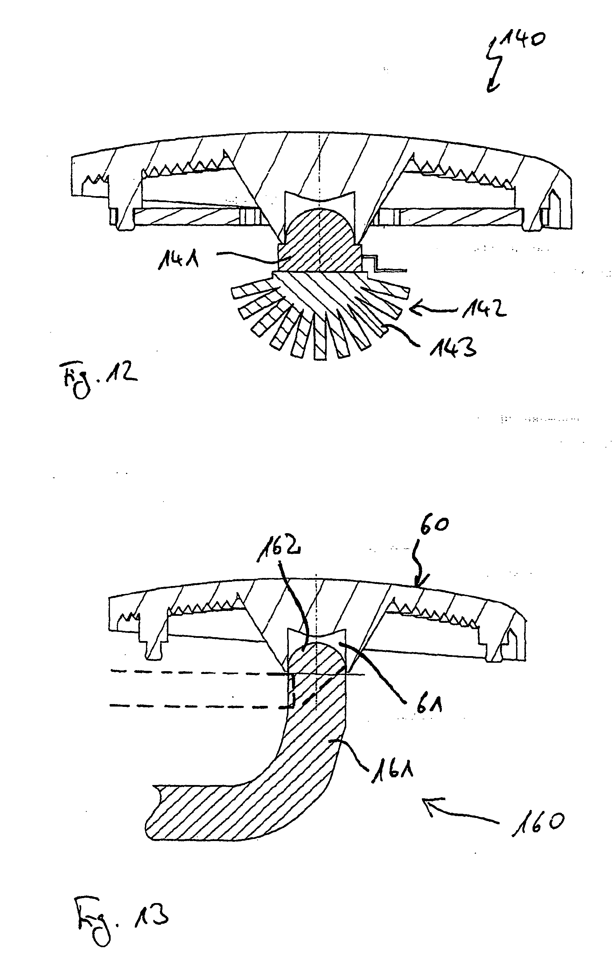

Die optische Anordnung 140 in Figur 12 hat an der Hochleistungs-LED 141 den bündig angeschlossenen Kühlkörper 142 mit Kühllamellen (exemplarisch beziffert mit 143), um eine Kühlung-der Hochleistungs-LED 141 zu bewirken, ohne auf ein Gehäuse (vergleiche Figuren 6 bis 11) angewiesen zu sein. Eine solche Anordnung ist insbesondere dann von Vorteil, wenn ein Leuchtengehäuse vor zu großer Aufheizung zu schützen ist - beispielsweise wegen einer Verletzungsgefahr am Gehäuse, insbesondere an einem Motorradblinker - oder wenn hinter der optischen Anordnung 140 ein genügend großer Raum zur Verfügung steht - beispielsweise wenn eine solche optische Anordnung 140 als Fahrzeugleuchte direkt im Chassis angeordnet ist. Selbstverständlich kann ein solches zusätzliches Kühlmittel auch in Ergänzung zu einer Wärmebrückenkühlung wie vorstehend beschrieben eingesetzt werden.

Um den beschriebenen vorteilhaften Effekt bezüglich der Lichtleitung und Lichtstreuung auch bei einer Lichterzeugung, die zentral von einer Lichtquelle ausgeht, nutzen zu können, ist im Beispielanschluss 160 ein Faserlichtleiter 161 mit einer Kollimatoroptik 162 anstelle einer LED in den Aufnahmeraum 61 des Leuchtenvorsatzes 60 geführt. Wenn in einer Fahrzeugleuchte wie beispielsweise einem Motorradblinker nur geringer Raum zur Verfügung steht, kann der Faserlichtleiter 161 auch nahe hinter dem Leuchtenvorsatz 60 herangeführt werden (vergleiche schematische Strichierung) und das Licht über einen im Wesentlichen rechtwinklig angestellten, ebenen oder gekrümmten Reflektor in eine Lichtemissionsoptik 162 gespiegelt werden.

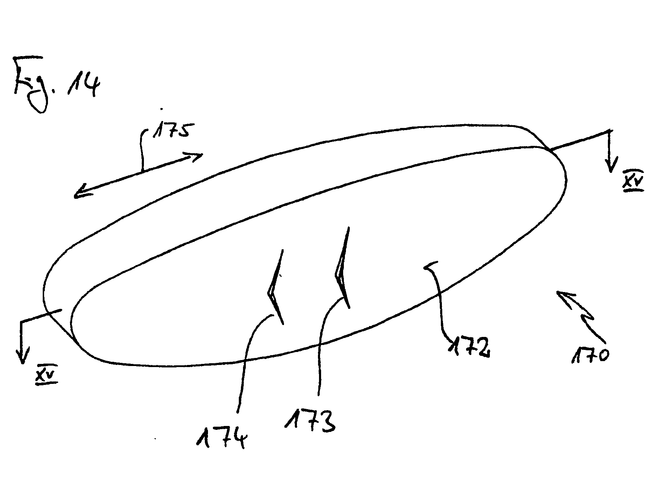

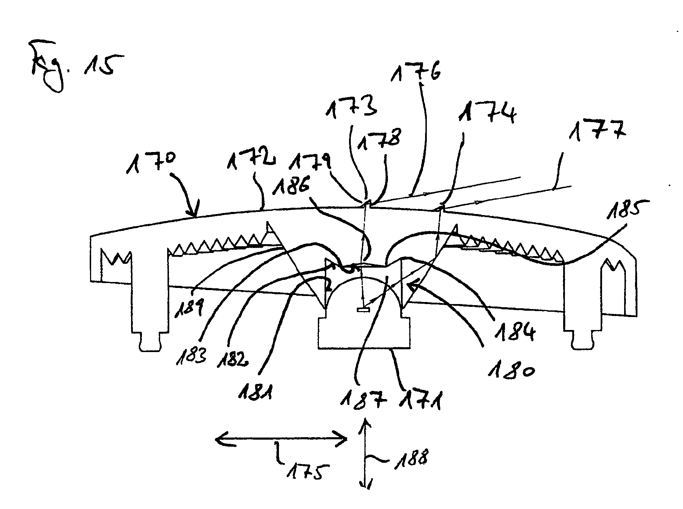

Der Leuchtenvorsatz 170 in den Figuren 14 und 15 ist weitgehend ähnlich mit den Leuchtenvorsätzen der voranstehend beschriebenen Ausfuhrungsbeispiele. Gleiches gilt für die Hochleistungs-LED 171. Diesen Leuchtenvorsatz 170 kennzeichnen jedoch zwei wesentliche Unterschiede:

An einer Abstrahlfläche 172 sind einerseits zwei Umlenkanformungen 173, 174 ausgebildet. Diese liegen als prismenförmige Nahten an der Abstrahlfläche 172 des Leuchtenvorsatzes 170. Die Nahten verlaufen jeweils im Wesentlichen senkrecht zu einer Haupterstreckungsrichtung 175 des Leuchtenvorsatzes 170. Dies hat den Hintergrund, dass Fahrzeugleuchten mit einer Haupterstreckungsrichtung üblicherweise horizontal am Fahrzeug angebracht werden. Bei einer Anordnung der Umlenkanformungen wie im dargestellten Ausführungsbeispiel kommen die Nähte demzufolge etwa vertikal zum Einbau. Bei einer Umlenkung des gerichtet abzustrahlenden Lichts 176, 177 fällt dieses demzufolge etwa horizontal seitlich aus der Leuchte aus und macht diese daher auch noch bei Standorten neben der Leuchte erkennbar.

Für eine besonders starke und dennoch gezielte Umlenkung weisen die prismenförmigen Umlenkanformungen 173, 174 jeweils eine erste Wand (exemplarisch gekennzeichnet mit 178) und eine zweite Wand (exemplarisch gekennzeichnet mit 179) auf, wobei die erste Wand im wesentlichen senkrecht auf der Abstrahlfläche 172 des Leuchtenvorsatzes 170 steht. Demgegenüber ist die zweite Wand 179 unter einem Winkel von etwa 45 ° gegenüber der Abstrahlfläche 172 geneigt.

Ein Einkoppelbereich 180 des Leuchtvorsatzes 170 besteht andererseits aus drei Lenkkoppelflächen,181, 182, 183 und drei Diffuskoppelflächen 184, 185, 186. Die erste Lenkkoppelfläche 181 ist im Wesentlichen zylindrisch ausgebildet. Die Wand 181 weitet sich mit etwa 1° Entformungsschräge auf, um nach dem Formen des Leuchtenvorsatzwerkstoffs den formgebenden Stift ohne Kratzer oder Schlieren aus einer Leuchtmittelaufnahme 187 entfernen zu können. Eine derartige Enüormungsschräge ist auch unabhängig von den übrigen Merkmalen für einen Leuchtvorsatz mit einer im wesentlichen zylindrischen Lenkkoppelfläche für eine saubere Ausformung bzw. Ausbildung der Lenkkoppelfläche vorteilhaft. Die zylindrische Lenkkoppelfläche 181 ist im Wesentlichen an der Innenseite des herausragenden Zentralkörpers des Leuchtenvorsatzes 170 angeordnet. Sie bildet die äußerste der konzentrisch angeordneten Teilflächen 181, 182, 183, 184, 185, 186 des Einkoppelbereichs 180. Innen an die erste Lenkkoppelfläche 181 schließt sich die erste Diüuskoppelfläche 184 an. Diese ist als scharfkantiger Übergang ringförmig im Leuchtenvorsatz 170 ausgebildet. Innen an die erste Diffuskoppelfläche schließt sich die zweite Lenkkoppelfläche 182 an. Diese hat die Form eines Kegelstumpfmantels mit einer Neigung der Kegelstumpfmantelfläche 182 gegenüber einer Hauptstrahlrichtung 188 von etwa 60 °. Die zweite Lenkkoppelfläche ist bezüglich des Strahlengangs von der LED 171 konvex und somit das emittierte Licht bündelnd - also als Sammeloptik - geformt. Innen an die zweite Lenkkoppelfläche 182 schließt sich die zweite Diffuskoppelfläche 185 an. Diese bildet in der Gestalt eines Übergangsradius' von 0,5 mm die Überleitung zur dritten Lenkkoppelfläche 183, welche unter einer Neigung von etwa 80 ° zur Hauptstrahlrichtung 188 mit einem Durchmesser von 3,5 mm als Kegelspitze im Kernhauptstrahlbereich vorgesehen ist. In ihrer Mitte und exakt zentral im rotationssymmetrischen Einkoppelbereich 180 fungiert die Spitze 186 des Kegels 183 als dritter Diffuskoppelbereich. Er hat mathematisch eine Ausdehnung von Null. Die dritte Lenkkoppelfläche 183 ist zur zweiten, sie umgebenden Lenkkoppelfläche 182 umgekehrt geformt. Sie ist bezüglich des von der LED 171 emittierten Lichts konkav und wirkt somit als Verteiloptik, die den von der LED 171 kommenden Strahlengang in den Lichtleitkörper hinein aufweitet.

Die erste Übergangskante 184 trennt somit den zylindrischen Abschnitt 181 des Einkoppelbereichs 180 von einer im Wesentlichen senkrecht zur Hauptstrahlrichtung 188 verlaufenden feineren Optik 182, 183, 184, 185, 186. Die zylindrische Lenkkoppelfläche 181, die Kante 184 und die innere Optik sind in ihrer Geometrie so aufeinander und auf die Hochleistungs-LED 171 abgestimmt, dass zumindest weitgehend das gesamte von der Hochleistungs-LED 171 emittierte Licht 177, welches noch vor der Kante 184 durch die Zylinderfläche 181 läuft, auf einen Reflektor 189 gebrochen wird und somit wieder in etwa parallel zur Hauptstrahlrichtung 188 nach vorne durch den Leuchtenvorsatz 170 laufen kann. Dies hat zur Folge, dass die Kante 184 - und damit verbunden die innere Optik - bevorzugt nicht allzu weit entfernt von der Hochleistungs-LED 171 im Leuchtenvorsatz angeordnet sein sollten. Anderenfalls entsteht benachbart zur Kante 180 ein relativ breiter Streifen an der zylindrischen Lenkkoppelfläche 181, durch welchen laufende Lichtstrahlen (nicht dargestellt) den Reflektor 180 verfehlen und unmittelbar unter einem großen Winkel zur Hauptstrahlrichtung 188 in die Randleuchtfläche 42 einlaufen. Hierdurch kann unter Umständen die verkehrstechnisch vorgeschriebene Mindestleuchtkraft in der Hauptstrahlrichtung zu gering werden.

Es sei darauf hingewiesen, dass es generell von Vorteil ist, wenn der Lichtemitter 171, die zylindrische Lenkkoppelfläche 181 und der Reflektor 189 so zueinander angeordnet sind, dass höchstens die durch ein Zehntel der Zylindermantelfläche laufenden Strahlen, vom Lichtemitter kommend, an der Reflektorfläche vorbei gelenkt werden; umgekehrt sollen die von mindestens 90 % der zylindrischen Lenkkoppelfläche 181 primär gebrochenen Strahlen auf den Reflektor 189 treffen.

### Bezugszeichenliste:

- 1: Lichtleitkörper
- 1a: Zentralkörper
- 2: optische Anordnung
- 3: Hochleistungs-LED
- 4,5: gerichtete Lichtstrahlen
- 6a,b: Lenkkoppelfläche aus zwei Teilflächen
- 7: Übergangskante
- 8: zentraler Bereich
- 9: Hauptachse
- 10: Teil des Lichtleitkörpers
- 11: hinteres Ende
- 12: Kuppel
- 13: Schulter
- 14a,b,c: Einkoppelbereich
- 15: Umgrenzungskante
- 16: Halbleiterlichtemitter
- 17: Abstrahlfläche
- 18: Reflexionsbereich
- 30: Anordnung
- 31a: Zentralkörper
- 31: Lichtleitkörper
- 32: Hochleistungs-LED
- 33, 34, 35: Strahlengänge
- 36, 37: Scharen gerichtet abzustrahlenden Lichts
- 38: Hauptstrahlrichtung
- 39: Schar diffus abzustrahlenden Lichts
- 40: Übergangskante
- 41: Diffusleitrichtungen
- 42: Randleuchtfläche
- 43: Reflexionsfläche
- 44: Anschlussbereich
- 45, 46: Richtungen
- 47: Abstrahlfläche
- 48: Streustrahl
- 60: Leuchtenvorsatz
- 61: Aufnahmeraum
- 62, 63: Klemmzapfen
- 64,65: Randleuchtbereich
- 66: Innenseite
- 67: Reflektorbereich
- 68,69: Längskanten
- 70: Hauptstrahlrichtung
- 71: Querachse
- 72: Einkoppelbereich
- 73: Umgrenzung
- 74: erste Teilfläche
- 75: Lichtleitkörper
- 76: zweite Teilfläche
- 77: Übergangskante
- 90: Motorradblinker
- 91: Gehäuse
- 92: Aufnahme
- 93, 94: Aussparungen
- 95: Leiterkarte
- 96: Hochleistungs-LED
- 97: Aufsetzkante
- 98: Schulter
- 99: Kühlbodenffäche
- 100: Wärmekontaktsockel
- 101: große Kühlfläche
- 120: weiterer Motorradblinker
- 121: Rückwand
- 122: Gehäuse
- 123: Kontaktfeder
- 124: Kühlbodenfläche
- 125: Hochleistungs-LED
- 126, 127: Auflagen
- 140: optische Anordnung
- 141: Hochleistungs-LED
- 142: Kühlkörper
- 143: Kühllamellen
- 160: Beispielanschluss
- 161: Faserlichtleiter
- 162: Kollimatoroptik
- 170: Leuchtenvorsatz
- 171: Hochleistungs-LED
- 172: Abstrahlfläche
- 173, 174: Umlenkanformungen
- 175: Haupterstreckungsrichtung
- 176, 177: gerichtet abzustrahlendes Licht
- 178: erste Wand
- 179: zweite Wand
- 180: Einkoppelbereich
- 181,182,183: Lenkkoppelflächen
- 184,185,186: Diffuskoppelflächen
- 187: Leuchtmittelausnehmung
- 188: Hauptstrahlrichtung
- 189: Reflektor

## Patentansprüche

1. Leuchte (90; 120) für ein Fahrzeug, insbesondere für ein Motorrad, mit einem Lichtemitter (3; 32; 96; 125; 141; 162; 171) und einem Lichtleitkörper (1; 31; 60, 75; 170), welcher einen aus dem übrigen Lichtleitkörper (1; 31; 60, 75) in Richtung auf den Lichtemitter (2; 42; 96; 125; 141; 162; 171) hervorragenden Zentralkörper (1a; 31a; 75; 170) umfasst, wobei der Lichtleitkörper (1; 31; 60, 75; 170) optisch aktiv vor dem Lichtemitter (3; 32; 96; 125; 141; 162; 171) angeordnet ist und einen Einkoppelbereich (14a,b,c; 40; 72; 180) mit einer Lenkkoppelfläche (14a,c; 74, 76; 181, 182, 183) und mit einer Diffusköppelfläche, (14b; 40; 77; 184, 185, 186) aufweist, wobei die Lenkkoppelfläche (14a,c; 74, 76; 181, 182, 183) zur Aufnahme gerichtet abzustrahlenden Lichts (4, 5; 33, 34, 36, 37; 176, 177) eingerichtet ist und die Diffuskoppelfläche (14b; 40; 77; 184, 185, 186) zum Einleiten diffus abzustrahlenden Lichts (41, 48) eingerichtet ist, ***gekertn-Zeichnet durch*** eine in einem Hauptstrahlbereich des Lichtemitters (3; 32; 96; 125; 141; 162; 171) angeordnete Verteiloptik (183) im Einkoppelbereich (14a,b,c; 40; 72; 180) zur Aufnahme aus der Leuchte (90;120) abzustrahlenden Lichts.

2. Leuchte (90; 120) nach Anspruch 1, ***dadurch gekennzeichnet, dass*** die Verteiloptik (183) in einem Kernhauptstrahlbereich des Lichtemitters (3; 32; 96; 125; 141; 162; 171) angeordnet ist.

3. Leuchte (90; 120) nach Anspruch 1 oder 2, ***dadurch gekennzeichnet, dass*** im Hauptstrahlbereich des Lichtemitters (3; 32; 96; 125; 141; 162; 171) eine Sammeloptik (6b; 76; 182) zur Aufnahme aus der Leuchte (90;120) abzustrahlenden Lichts vorgesehen ist, während die Verteiloptik (183) etwa im Kernhauptstrahlbereich angeordnet ist.

4. Leuchte (90; 120) nach einem der vorhergehenden Ansprüche, ***dadurch gekennzeichnet, dass*** die Verteiloptik (183) als Teil der Lenkkoppelfläche (14a,c; 74, 76; 181, 182, 183) dient.

5. Leuchte (90; 120) nach einem der vorhergehenden Ansprüche, ***dadurch gekennzeichnet, dass*** die Verteiloptik (183) konzentrisch innerhalb einer Sammeloptik (6b; 7b; 182) angeordnet ist.

6. Leuchte (90; 120) nach Anspruch 5, ***dadurch gekennzeichnet, dass*** ein Übergang (185) zwischen der außen liegenden Sammeloptik (6b; 7b; 182) und der innen liegenden Verteiloptik (183) scharfkantig oder mit sehr kleinem Übergangsradius ausgebildet ist, sodass der Übergang (185) als weitere Diffuskoppelfläche (185) wirkt.

7. Leuchte (90; 120) nach einem der vorhergehenden Ansprüche, ***dadurch gekennzeichnet, dass*** die Verteiloptik (183) als Kegelstumpf oder als Kegelspitze (183) ausgebildet ist.

8. Leuchte (90; 120) nach Anspruch 7, ***dadurch gekennzeichnet, dass*** der Kegelstumpf bzw. die Kegelspitze (183) einen Neigungswinkel von etwa 80 ° zwischen Mantelfläche und Hauptstrahlrichtung (188) aufweist.

## Claims

1. Lamp (90; 120) for a vehicle, in particular a motor cycle, with a light emitter (3; 32; 96; 125; 141; 162; 171) and a light guiding body (1; 31; 60; 75; 170), which comprises a central body (1a; 31a; 75; 170) protruding from the remaining light guiding body (1; 31; 60, 75) in direction of the light emitter (2; 42; 96; 125; 141; 162; 171), whereby the light guiding body (1; 31; 60; 75; 170) is arranged optically active in front of the light emitter (3; 32; 96; 125; 141; 162; 171) and has a coupling-in region (14a,b,c; 40; 72; 180) with a steering coupling surface (14a,c; 74; 76; 181, 182, 183) and a diffuse coupling surface (14b; 40; 77; 184, 185, 186) whereby the steering coupling surface (14a,c; 74; 76; 181, 182, 183) is adapted to receive light (4, 5; 33, 34, 36, 37; 176, 177) to be directionally reflected and the diffuse coupling surface (14b; 40; 77; 184, 185, 186) is adapted to introduce light (41, 48) to be diffusely reflected, **characterised by** a distributing optics (183) arranged in a main radiating region of the light emitter (3; 32; 96; 125; 141; 162; 171) in the coupling-in region (14a,b,c; 40; 72; 180) for receiving light to be reflected from the lamp (90; 120).

2. Lamp (90; 120) according to claim 1, **characterised in that** the distributing optics (183) is arranged in a core main radiating region of the light emitter (3; 32; 96; 125; 141; 162; 171).

3. Lamp (90; 120) according to claim 1 or 2, **characterised in that** a collecting optics (6b; 76; 182) for receiving light to be reflected from the lamp (90; 120) is provided in the main radiating region of the light emitter (3; 32; 96; 125; 141; 162; 171), whilst the distributing optics (183) is arranged approximately in the core main radiating region.

4. Lamp (90; 120) according to one of the preceding claims, **characterised in that** the distributing optics (183) serves as part of the steering coupling surface (14a,c; 74; 76; 181, 182, 183).

5. Lamp (90; 120) according to one of the preceding claims, **characterised in that** the distributing optics (183) is arranged concentrically within a collecting optics (6b; 7b; 182).

6. Lamp (90; 120) according to claim 5, **characterised in that** a transition (185) is formed between the externally arranged collecting optics (6b; 7b; 182) and the internally arranged collecting optics (183) the transition having sharp edges or a very small transitional radius, resulting in the transition (185) acting as a further diffuse coupling surface (185).

7. Lamp (90; 120) according to one of the preceding claims, **characterised in that** the distributing optics (183) is formed as a truncated cone or a cone point (183).

8. Lamp (90; 120) according to claim 7, **characterised in that** the truncated cone or the cone point (183) has an angle of inclination of approximately 80° between the lateral surface and the main radiating direction (188).

## Revendications

1. Lampe (90 ; 120) pour un véhicule, en particulier pour un moto, comprenant un émetteur de lumière (3 ; 32 ; 96 ; 125 ; 141 ; 162 ; 171) et un corps conducteur de lumière (1 ; 31 ; 60 ; 75 ; 170), qui comprend un corps central (1a ; 31a ; 75 ; 170) dépassant du corps conducteur de lumière (1 ; 31 ; 60 ; 75) restant en direction de l'émetteur de lumière (2 ; 42 ; 96 ; 125 ; 141 ; 162 ; 171), le corps conducteur de lumière (1 ; 31 ; 60 ; 75 ; 170) étant disposé de façon visuellement active devant l'émetteur de lumière (3 ; 32 ; 96 ; 125 ; 141 ; 162 ; 171) et présentant une zone d'injection (14a, b, c ; 40 ; 72 ; 180) avec une surface de couplage de guidage (14a, c ; 74, 76 ; 181, 182, 183) et une surface de couplage diffuse (14b ; 40 ; 77 ; 184 ; 185 ; 186), la surface de couplage de guidage (14a, c ; 74, 76 ; 181, 182, 183) étant aménagée pour la réception de lumière à émettre de façon orientée (4, 5 ; 33, 34, 36, 37 ; 176, 177) et la surface de couplage diffuse (14b ; 40 ; 77 ; 184, 185, 186) pour l'introduction de lumière (41, 48) à émettre de façon diffuse, **caractérisée par** une optique de répartition (183) disposée dans une zone de faisceau principal de l'émetteur de lumière (3 ; 32 ; 96 ; 125 ; 141 ; 162 ; 171) dans la zone d'injection (14a, b, c ; 40 ; 72 ; 180) pour la réception de lumière à émettre à partir de la lampe (90 ; 120).

2. Lampe (90 ; 120) selon la revendication 1, **caractérisée en ce que** l'optique de répartition (183) est disposée dans une zone de faisceau principal de l'émetteur de lumière (3 ; 32 ; 96 ; 125 ; 141 ; 162 ; 171).

3. Lampe (90 ; 120) selon la revendication 1 ou 2, **caractérisée en ce qu'**une optique collectrice (6b ; 76 ; 182) est prévue dans la zone de faisceau principal de l'émetteur de lumière (3 ; 32 ; 96 ; 125 ; 141 ; 162 ; 171) pour la réception de lumière à émettre à partir de la lampe (90 ; 120), alors que l'optique de répartition (183) est disposée à peu près dans la zone de faisceau principal clé.

4. Lampe (90 ; 120) selon l'une quelconque des revendications principales, **caractérisée en ce que** l'optique de répartition (183) fait office de partie de la surface de couplage de guidage (14a, c ; 74, 76 ; 181, 182, 183).

5. Lampe (90 ; 120) selon l'une quelconque des revendications précédentes, **caractérisée en ce que** l'optique de répartition (183) est disposée de façon concentrique à l'intérieur d'une optique collectrice (6b ; 7b ; 182).

6. Lampe (90 ; 120) selon la revendication 5, **caractérisée en ce qu'**une transition (185) entre l'optique collectrice (6b ; 7b ; 182) située à l'extérieur et l'optique de répartition (183) disposée à l'intérieur est conçue avec des arêtes vives ou avec un très petit rayon de transition, de sorte que la transition (185) agit comme autre surface de couplage diffuse (185).

7. Lampe (90 ; 120) selon l'une quelconque des revendications précédentes, **caractérisée en ce que** l'optique de répartition (183) est conçue comme cône tronqué ou comme pointe de cône (183).

8. Lampe (90 ; 120) selon la revendication 7, **caractérisée en ce que** le cône tronqué ou la pointe de cône (183) présente un angle d'inclinaison d'environ 80° entre la surface d'enveloppe et la direction du faisceau principal (188).
